# EUROPÄISCHE PATENTANMELDUNG

(11) **EP 4 843 825 A1**
(43) Veröffentlichungstag der Anmeldung: **25.11.2026**
(21) Anmeldenummer: 26160453.2
(22) Anmeldetag: 24.02.2026
(51) Int. Cl.: B60N 2/14, B60N 2/68

(54) **GURTGESTELL EINER FAHRZEUGSITZBANK**

(30) Priorität: 22.05.2025 DE 102025119958
(71) Anmelder: Aguti Produktentwicklung & Design GmbH, 88085 Langenargen (DE)
(72) Erfinder: Rogg, Christian, 88142 Wasserburg (DE)
(74) Vertreter: RavensPAT Patentanwälte Partnerschaft mbB

(57) **Zusammenfassung**

Gurtgestell einer Fahrzeugsitzbank, wobei im angeordneten Zustand des Gurtgestells an der Fahrzeugsitzbank die Fahrzeugsitzbank einen Fahrzeugsitzplatz bereitstellt, wobei das Gurtgestell eine Schiebevorrichtung aufweist, um eine Sitzflächenauflage des Gurtgestells in einer Schwenk-Schiebebewegung von einer ersten Position in eine zweite Position zu verschwenken, wobei die Schiebevorrichtung ein erstes und ein zweites Schiebeelement aufweist, wobei das erste und das zweite Schiebeelement voneinander beabstandet an der Sitzflächenauflage angeordnet sind, wobei die Schiebevorrichtung eine erste und eine zweite Führungskontur aufweist, wobei das erste Schiebeelement verschieblich an der ersten Führungskontur gelagert ist, wobei das zweite Schiebelement an der zweiten Führungskontur verschieblich gelagert ist, sodass durch das Zusammenspiel der ersten und der zweiten Führungskontur und des ersten und des zweiten Schiebeelements die Schwenk-Schiebebewegung vorgegeben ist.

## Beschreibung

### Stand der Technik

Umbaubare Fahrzeugsitze oder umbaubare Fahrzeugsitzbänke sind bekannt. Insbesondere sind Fahrzeugsitzbänke für Wohnmobile bekannt, welche sich beispielsweise durch Umklappen der Rückenlehne in eine Liegefläche umbauen lassen.

Weiter sind Fahrzeugsitzbänke bekannt, welche sich durch Umsortieren oder Ändern der Anordnung der Sitzkissen der Fahrzeugsitzbank in eine Liegefläche umbauen lassen. Nachteilig an diesen Fahrzeugsitzbänken ist zum einen die vergleichsweise geringe Fläche der Liegefläche und zum anderen ist hierdurch häufig weiterer Stauraum für zusätzlich notwendige Polster im Wohnmobil einzuplanen.

### Aufgabe und Vorteile der Erfindung

Aufgabe der vorliegenden Erfindung ist es, ein verbessertes Gurtgestell einer Fahrzeugsitzbank bereitzustellen, beispielsweise ein variableres Gurtgestell einer Fahrzeugsitzbank bereitzustellen. Insbesondere ist es Aufgabe der vorliegenden Erfindung ein Gurtgestell bereitzustellen, um eine umbaubare Fahrzeugsitzbank realisieren zu können, welche einen vergleichsweise einfachen Umbau ermöglicht.

Die Aufgabe wird durch die Merkmale des unabhängigen Anspruchs 1 gelöst. In den abhängigen Ansprüchen sind vorteilhafte Ausbildungsformen der Erfindung genannt.

Die Erfindung geht von einem Gurtgestell einer Fahrzeugsitzbank aus, wobei im angeordneten Zustand des Gurtgestells an der Fahrzeugsitzbank die Fahrzeugsitzbank einen Fahrzeugsitzplatz bereitstellt, wobei das Gurtgestell eine Schiebevorrichtung aufweist, um eine Sitzflächenauflage des Gurtgestells in einer Schwenk-Schiebebewegung von einer ersten Position in eine zweite Position zu verschwenken, wobei die Schiebevorrichtung ein erstes und ein zweites Schiebeelement aufweist, wobei das erste und das zweite Schiebeelement voneinander beabstandet an der Sitzflächenauflage angeordnet sind, wobei die Schiebevorrichtung eine erste und eine zweite Führungskontur aufweist, wobei das erste Schiebeelement verschieblich an der ersten Führungskontur gelagert ist, wobei das zweite Schiebelement an der zweiten Führungskontur verschieblich gelagert ist, sodass durch das Zusammenspiel der ersten und der zweiten Führungskontur und des ersten und des zweiten Schiebeelements die Schwenk-Schiebebewegung vorgegeben ist. Hierdurch ist eine vergleichsweise einfaches und sicheres Bewegen der Sitzflächenauflage von der ersten Position in die zweite Position ermöglicht.

Beispielsweise stellt die Fahrzeugsitzbank im angeordneten Zustand des Gurtgestells genau einen Fahrzeugsitzplatz, genau zwei Fahrzeugsitzplätze oder genau drei Fahrzeugsitzplätze bereit. Ein Fahrzeugsitzplatz ist hierbei eine Sitzmöglichkeit der Fahrzeugsitzbank für einen Nutzer während der Fahrt des Fahrzeugs. Beispielsweise ist die Fahrzeugsitzbank in ein Fahrzeug einbaubar ausgebildet. Denkbar ist, dass die Fahrzeugsitzbank Sicherungsmöglichkeiten, z.B. einen Dreipunktgurt, für den Nutzer bereitstellt, um den Nutzer während der Fahrt, insbesondere entsprechend der vorgegebenen Normen, am Fahrzeugsitzplatz zu sichern.

Vorstellbar ist, dass am Gurtgestell entsprechende Sicherungsmöglichkeiten angeordnet sind. Beispielsweise weist das Gurtgestell Ankerpunkte auf, um die Sicherungsmöglichkeiten daran zu befestigen, z.B. eine Gurtschließe oder ein Gurtumlenkrolle eines Dreipunktgurtsystems daran zu befestigen. Beispielsweise ist das Gurtgestell dazu ausgebildet, eine Sicherungsmöglichkeit für einen Fahrzeugsitzplatz, eine Sicherungsmöglichkeit für zwei Fahrzeugsitzplätze, z.B. zwei Dreipunktgurte, oder eine Sicherungsmöglichkeit für drei Fahrzeugsitzplätze, z.B. drei Dreipunktgurte, bereitzustellen. Beispielsweise ist/sind am Gurtgestell ein, zwei oder drei Dreipunktgurte angeordnet.

Beispielsweise weist die Sitzflächenauflage eine Auflagefläche für ein Sitzkissen der Fahrzeugsitzbank auf. Beispielsweise bildet das Sitzkissen in der ersten Position der Sitzflächenauflage ein Sitzkissen des Fahrzeugsitz, auf welchem eine Person sitzen kann.

Zum Beispiel ist die Sitzflächenauflage in der Schwenk-Schiebebewegung ausschließlich in einer einzigen Bewegungsebene, z.B. in einer horizontalen Ebene, bewegbar angeordnet. Beispielsweise ist die Schiebevorrichtung derart ausgebildet, dass eine Bewegung der Sitzflächenauflage in vertikaler Richtung, beispielsweise während der Schwenk-Schiebebewegung, unterbunden ist. Beispielsweise wird die Sitzflächenauflage von der ersten in die zweite Position um 90° verschwenkt oder gedreht.

Beispielsweise ist die Schwenk-Schiebebewegung als eine z.B. jederzeit überlagerte Schwenkbewegung und Schiebebewegung ausgebildet, sodass die Sitzflächenauflage in der Schwenk-Schiebebewegung jederzeit sowohl um eine Schwenk- oder Drehachse gedreht, als auch die Schwenk- oder Drehachse gleichzeitig verschoben wird. Vorstellbar ist jedoch auch, dass die Sitzflächenauflage in der Schwenk-Schiebebewegung von der ersten Position in die zweite Position abschnittsweise geschwenkt und abschnittsweise verschoben wird. Beispielsweise wird die Sitzflächenauflage in der Schwenk-Schiebebewegung von der ersten Position in die zweite Position zunächst verschoben und anschließend verschwenkt oder umgekehrt. Hierbei können die Schwenk- und Schiebebewegungen sich nacheinander wiederholen.

Beispielsweise erstreckt sich die Schwenkachse oder die Drehachse der Schiebevorrichtung quer zu einer Schieberichtung. Beispielsweise erstreckt sich die Schwenkachse oder die Drehachse der Schiebevorrichtung quer zur Bewegungsebene der Sitzflächenauflage. Beispielsweise erstreckt sich die Schwenkachse oder die Drehachse der Schiebevorrichtung entlang der Vertikalen.

Vorstellbar ist weiter, dass das Gurtgestell eine Vertikalstütze, eine an der Vertikalstütze angeordnete Querstrebe und/oder einen Unterbau aufweist. Denkbar ist, dass das Gurtgestell zwei z.B. voneinander beabstandete Vertikalstützen aufweist. Beispielsweise ist die Sitzflächenauflage an einer Oberseite des Unterbaus verschieblich oder beweglich am Unterbau gelagert. Beispielsweise ist die Sitzflächenauflage beweglich aufliegend auf der Oberseite des Unterbaus vorhanden. Denkbar ist weiter, dass an der Vertikalstütze und/oder der Querstrebe Elemente der Sicherungsmöglichkeiten, z.B. ein Gurtaufroller, ein Gurtumlenker und/oder eine Gurtschließe eines Dreipunktgurtsystems, angeordnet sind.

Beispielsweise ist die Sitzflächenauflage mit der Oberseite des Unterbaus über eine Zapfen-Kulissenführungs-Verbindung gekoppelt. Z.B. ist an der Oberseite des Unterbaus eine Kulissenführung ausgebildet, in welche ein an der Sitzflächenauflage angeordneter Verriegelungszapfen eingreift, sodass eine Bewegung der Sitzflächenauflage relativ zum Unterbau durch die Zapfen-Kulissenführungs-Verbindung gesteuert ist.

Beispielsweise ist die Sitzflächenauflage als ein plattenförmiges Element, z.B. als eine Platte, ausgebildet. Denkbar ist, dass die Sitzflächenauflage reckteckförmig, oval oder rund ausgebildet ist. Vorstellbar ist hierbei, dass eine reckteckförmige Sitzflächenauflage abgerundete und/oder abgeschrägte Ecken aufweist. Hierdurch ist eine Verletzungsgefahr für einen Nutzer vermindert, als auch eine Bewegung der Sitzflächenauflage auf einer vergleichsweise kleineren Grundfläche realisierbar.

Die reckteckförmige Sitzflächenauflage erstreckt sich beispielsweise entlang einer Länge, entlang einer Breite und entlang einer Höhe der Sitzflächenauflage. Beispielsweise ist die Erstreckung in Längenrichtung der Sitzflächenauflage größer als eine Erstreckung in Breitenrichtung.

Auch wird vorgeschlagen, dass die Schiebevorrichtung ein Schienenelement aufweist, wobei das Schienenelement in seiner Längserstreckung horizontal ausgerichtet am Gurtgestell vorhanden ist, wobei das Schienenelement sich im angeordneten Zustand des Gurtgestells in einem Fahrzeug entlang der Längserstreckung des Schienenelements quer zu einer Fahrtrichtung des Fahrzeugs erstreckt, wobei das erste Schiebeelement am Schienenelement verschieblich gelagert ist, sodass das erste Schiebeelement entlang der Längserstreckung des Schienenelements am Schienenelement verschieblich ist. Hierdurch ist das Gurtgestell vergleichsweise vereinfacht ausgebildet.

Denkbar ist, dass eine Führungskontur am Schienenelement ausgebildet ist. Zum Beispiel weist das Schienenelement die Führungskontur auf. Beispielsweise ist die erste Führungskontur an einem ersten Schienenelement ausgebildet. Vorstellbar ist, dass das erste Schienenelement die erste Führungskontur aufweist. Beispielsweise ist das erste Schiebeelement am ersten Schienenelement verschieblich gelagert. Vorstellbar ist auch, dass das erste Schienenelement an der Vertikalstütze oder an den Vertikalstützen befestigt ist.

Weiter wird vorgeschlagen, dass das erste Schiebelement in der Schwenk-Schiebebewegung in einer ersten linearen Richtung bewegt wird, wobei das zweite Schiebeelement in der Schwenk-Schiebebewegung in einer zweiten linearen Richtung bewegt wird, wobei die erste und die zweite Richtung quer zueinander ausgerichtet vorhanden sind. Hierdurch ist vergleichsweise einfach eine Schwenk-Schiebebewegung der Sitzflächenauflage realisierbar.

Ebenfalls wird vorgeschlagen, dass das Schienenelement als eine Schiene ausgebildet ist und das erste Schiebeelement als ein Gleiter oder als ein Schienen-Wagen ausgebildet ist.

Zum Beispiel wird der Gleiter oder der Schienen-Wagen des ersten Schiebeelements in der Schwenk-Schiebebewegung in einer ersten linearen Richtung bewegt, wobei ein Gleiter oder der Schienen-Wagen des zweiten Schiebeelements in der Schwenk-Schiebebewegung in einer zweiten linearen Richtung bewegt wird, wobei die erste und die zweite Richtung quer zueinander ausgerichtet vorhanden sind.

Beispielsweise weist ein Schiebeelement einen Schienen-Wagen oder einen Schienengleiter auf. Beispielsweise ist das erste und/oder das zweite Schiebeelement als ein Schienenwagen oder als ein Schienengleiter ausgebildet. Beispielsweise ist das Schiebeelement mittels des Schienenwagens oder des Schienengleiters beweglich, z.B. linearbeweglich, an der Führungskontur, z.B. am Schienenelement, gelagert. Beispielsweise ist das Schiebeelement mittels des Schienenwagens oder des Schienengleiters ausschließlich linearbeweglich mit der Führungskontur gekoppelt. Hierdurch ist eine vergleichsweise kostengünstige und sichere Bewegungsführung der Sitzflächenauflage realisiert.

Beispielsweise ist das erste Schiebeelement an einem ersten Anbindungspunkt mit der Sitzflächenauflage verbunden. Denkbar ist, dass das erste Schiebeelement den ersten Anbindungspunkt bildet. Vorstellbar ist auch, dass die Sitzflächenauflage den ersten oder einen zweiten Anbindungspunkt aufweist. Beispielsweise ist das erste Schiebeelement am ersten Anbindungspunkt drehbeweglich mit der Sitzflächenauflage verbunden. Beispielsweise ist der Schienenwagen oder der Schienengleiter des ersten Schiebeelements beweglich, z.B. drehbeweglich, mit der Sitzflächenauflage am ersten Anbindungspunkt verbunden.

Beispielsweise werden das erste und das zweite Schiebeelement in der Schwenk-Schiebebewegung in unterschiedliche Richtungen bewegt. Denkbar ist, dass die Bewegung des ersten Schiebelements und die Bewegung des zweiten Schiebeelements in der Schwenk-Schiebebewegung der Sitzflächenauflage quer oder senkrecht zueinander ausgerichtet sind. Zum Beispiel bewegen sich das erste und das zweite Schiebeelement in der Schwenk-Schiebebewegung in der Bewegungsebene der Sitzflächenauflage oder in einer Ebene parallel zur Bewegungsebene der Sitzflächenauflage.

Außerdem wird vorgeschlagen, dass die Schiebevorrichtung ein zweites Schienenelement aufweist, wobei das zweite Schienenelement eine Längserstreckung aufweist, welche quer zur Längserstreckung des ersten Schienenelements ausgerichtet ist. Hierdurch ist ein vergleichsweise einfacher Aufbau des Gurtgestells realisiert. Beispielsweise weist das zweite Schienenelement die zweite Führungskontur auf. Denkbar ist auch, dass die zweite Führungskontur am zweiten Schienenelement ausgebildet ist.

Beispielsweise ist das zweite Schienenelement dazu ausgebildet, an einer Fahrzeugseitenwand und/oder an einer Fahrzeugsäule befestigt zu werden. Zum Beispiel erstreckt sich das zweite Schienenelement im angeordneten Zustand am Fahrzeug in oder entlang der Fahrtrichtung des Fahrzeugs. Vorstellbar ist jedoch auch, dass das zweite Schienenelement am Unterbau des Gurtgestells angeordnet oder befestigt ist.

Zum Beispiel sind das erste und das zweite Schienenelement quer zu einer Längserstreckung der Vertikalstütze des Gurtgestells ausgerichtet. Denkbar ist auch, dass das erste und/oder das zweite Schienenelement parallel zu einer Längserstreckung der Querstrebe des Gurtgestells ausgerichtet vorhanden sind. Beispielsweise erstrecken sich das erste und das zweite Schienenelement parallel zur Oberseite des Unterbaus des Gurtgestells.

Weiter wird vorgeschlagen, dass das zweite Schiebeelement am zweiten Schienenelement verschieblich gelagert ist, sodass das zweite Schiebeelement entlang einer Längserstreckung des zweiten Schienenelements am zweiten Schienenelement verschieblich ist. Hierdurch ist eine verkantungsfreie Schwenk-Schiebebewegung realisierbar.

Beispielsweise ist das erste Schiebeelement ausschließlich verschieblich, z.B. ausschließlich linearverschieblich, am ersten Schienenelement gelagert. Denkbar ist, dass das zweite Schiebeelement ausschließlich verschieblich, z.B. ausschließlich linearverschieblich, am zweiten Schienenelement gelagert ist.

Auch wird vorgeschlagen, dass das erste Schiebeelement mit dem zweiten Schiebeelement verbunden ist. Hierdurch ist ein vergleichsweise stabiler Aufbau des Gurtgestells realisierbar.

Beispielsweise sind das erste und das zweite Schienenelement mittelbar oder unmittelbar miteinander verbunden. Denkbar ist, dass das erste Schienenelement an einem zweiten Ende des ersten Schienenelements mit einem ersten Ende des zweiten Schienenelements, z.B. mittels eines Steckverbinders, unmittelbar verbunden ist. Vorstellbar ist jedoch auch, dass das erste und das zweite Schienenelement mittelbar, z.B. über die Sitzflächenauflage oder den Unterbau, z.B. beabstandet zueinander, miteinander verbunden sind. Beispielsweise sind das erste und das zweite Schienenelement im angeordneten Zustand positionsfest vorhanden. Zum Beispiel ist das erste Schienenelement zum zweiten Schienenelement positionsfest vorhanden.

Außerdem wird vorgeschlagen, dass die Sitzflächenauflage eine rechteckige Form aufweist, wobei das erste Schiebeelement an einer ersten Eckbereich der Sitzflächenauflage mit der Sitzflächenauflage verbunden ist, wobei das zweite Schiebeelement an einem zweiten Eckbereich der Sitzflächenauflage mit der Sitzflächenauflage verbunden ist. Hierdurch ist eine Schwenk-Schiebebewegung auf einer vergleichsweise kleinen Grundfläche realisierbar.

Beispielsweise weist die rechteckige Sitzflächenauflage eine Längsseite und eine Breitseite, sowie eine Höhe auf. Beispielsweise ist das erste Schiebeelement und das zweite Schiebeelement an einer gleichen Längsseite der Sitzflächenauflage mit der Sitzflächenauflage verbunden. Beispielsweise sind das erste Schiebeelement und das zweite Schiebeelement über mindestens 50% der Länge der Längsseite der Sitzflächenauflage voneinander beabstandet an der Sitzflächenauflage angeordnet.

Zum Beispiel ist ein erster Anbindungspunkt an dem ersten Eckbereich der Sitzflächenauflage ausgebildet und ein zweiter Anbindungspunkt an dem zweiten Eckbereich der Sitzflächenauflage. Beispielsweise sind der erste und der zweite Anbindungspunkt positionsfest zueinander an der Sitzflächenauflage befestigt oder angeordnet. Beispielsweise sind das erste und das zweite Schiebeelement voneinander beabstandet an der Sitzflächenauflage angeordnet. Zum Beispiel ist das erste und/oder das zweite Schiebeelement an einem Eckbereich der Sitzflächenauflage mit der Sitzflächenauflage verbunden. Beispielsweise sind der erste und der zweite Anbindungspunkt über mindestens 50% der Länge der Längsseite der Sitzflächenauflage voneinander beabstandet an der Sitzflächenauflage ausgebildet. Zum Beispiel sind der erste und der zweite Anbindungspunkt an zueinander benachbarten Eckbereichen der Sitzflächenauflage ausgebildet.

Auch wird vorgeschlagen, dass das erste und/oder das zweite Schiebeelement gelenkig und/oder beweglich mit der Sitzflächenauflage verbunden ist. Hierdurch ist die Sitzflächenauflage vergleichsweise verkantungsfrei bewegbar gelagert.

Beispielsweise ist das erste Schiebeelement mit einem ersten Ende am Anbindungspunkt mit der Sitzflächenauflage, z.B. beweglich, verbunden und mit einem zweiten Ende mittels des Schiene-Wagens oder des Schienengleiters mit dem ersten Schienenelement. Beispielsweise weist das erste Schiebeelement ein Gelenkelement auf, mittels welchem das erste und das zweite Ende des ersten Schiebeelement relativ zueinander beweglich vorhanden sind. Beispielsweise ist das erste Schiebeelement mittels des Gelenkelements des ersten Schiebeelements beweglich mit der Sitzflächenauflage verbunden. Zum Beispiel ist das zweite Schiebeelement mittels eines Gelenkelements des zweiten Schiebeelements beweglich mit der Sitzflächenauflage verbunden. Zum Beispiel sind das erste und das zweite Schiebeelement relativ zueinander positionsfest mit der Sitzflächenauflage verbunden.

Beispielsweise weist das Gelenkelement des ersten Schiebeelements eine Gelenkachse auf, z.B. eine Schwenk- und/oder Drehachse, welche quer zur Bewegungsebene des Sitzflächenelements ausgebildet ist. Beispielsweise kreuzt oder durchgreift die Gelenkachse des Gelenkelements des ersten Schiebeelements im Bereich des ersten Anbindungspunkts die Sitzflächenauflage. Zum Beispiel kreuzt oder durchgreift die Gelenkachse des Gelenkelements des zweiten Schiebeelements im Bereich des zweiten Anbindungspunkts die Sitzflächenauflage.

Vorstellbar ist, dass die Sitzflächenauflage in der ersten Position mit einer ersten Längsseite parallel und/oder anliegend zum ersten Schienenelement ausgerichtet oder angeordnet vorhanden ist. Beispielsweise ist die Sitzflächenauflage in der ersten Position mit einer ersten Breitseite parallel und/oder anliegend zum zweiten Schienenelement ausgerichtet oder angeordnet vorhanden. Beispielsweise ist die Sitzflächenauflage in der zweiten Position mit der ersten Längsseite parallel und/oder anliegend zum zweiten Schienenelement ausgerichtet oder angeordnet vorhanden. Vorstellbar ist weiter, dass in der zweiten Position die Sitzflächenauflage mit einer zweiten Breitseite parallel und/oder anliegend am ersten Schienenelement ausgerichtet oder angeordnet vorhanden ist. Beispielsweise ist die erste Breitseite der Sitzflächenauflage gegenüberliegend und beabstandet zur zweiten Breitseite der Sitzflächenauflage vorhanden.

Beispielsweise wird das erste und/oder das zweite Schienenelement, z.B. der Schienenwagen des ersten und/oder des zweiten Schienenelements, bei der Bewegung der Sitzflächenauflage von der ersten in die zweite Position in einem Bereich von etwa 90°, z.B. zwischen 80° und 100°, um die Gelenkachse des Gelenkelements des jeweiligen Schienenelement oder um einen Drehpunkt des jeweiligen Anbindungspunkts gedreht.

Ebenfalls wird vorgeschlagen, dass das Gurtgestell eine Stützvorrichtung aufweist, welche an einem der Schienenelemente befestigbar ist, wobei an der Stützvorrichtung eine Tischfläche eines Tisch anordenbar ist, wobei die Stützvorrichtung dazu ausgebildet ist, im befestigten Zustand am Schienenelement die Tischfläche abzustützen. Hierdurch ist eine Variabilität des Gurtgestells erhöht.

Beispielsweise ist das Gurtgestell derart ausgebildet, dass die Stützvorrichtung vor einer Schwenk-Schiebebewegung der Sitzflächenauflage zunächst vom Schienenelement entfernt werden muss. Z.B. ist die Stützvorrichtung vom ersten zum zweiten Schienenelement oder umgekehrt umsteckbar ausgebildet.

Beispielsweise ist die Stützvorrichtung lösbar an einem oder jedem der Schienenelemente befestigbar. Hierdurch ist eine Flexibilität des Gurtgestells vergleichsweise erhöht. Denkbar ist auch, dass an der Stützvorrichtung sowohl eine Tischfläche, als auch ein weiteres Polster anordenbar ist. Durch das weitere Polster ist beispielsweise eine Sitz- oder Liegefläche vorteilhaft erweitert.

Weiter wird vorgeschlagen, dass die Schiebevorrichtung von der ersten Position in die zweite Position bewegbar ist, sodass ein an der Schiebevorrichtung angeordnetes erstes Polster der Fahrzeugsitzbank durch die Bewegung der Schiebevorrichtung von einer ersten Ausrichtung in eine zweite Ausrichtung gedreht und/oder verschwenkt wird, wobei das erste Polster der Fahrzeugsitzbank ein Sitzkissen oder Sitzpolster der Fahrzeugsitzbank bildet, wobei die Stützvorrichtung eine Auflagefläche für ein zweites Polster der Fahrzeugsitzbank bereitstellt, wobei im aufliegenden Zustand des zweiten Polsters auf der Auflagefläche der Stützvorrichtung und in der zweiten Ausrichtung des ersten Polsters das erste Polster und das zweite Polster eine Liegefläche für eine Person bereitstellen, wobei das Gurtgestell eine Sitzrichtung der Fahrzeugsitzplätze bereitstellt, wobei die Stützvorrichtung in einer Richtung quer zur Sitzrichtung in der zweiten Position der Schiebevorrichtung neben dem ersten Polster vorhanden ist. Hierdurch ist die Fahrzeugsitzbank vergleichsweise einfach in eine Liegefläche umbaubar.

Vorstellbar ist, dass im angeordneten Zustand des Gurtgestells an der Fahrzeugsitzbank die Stützvorrichtung in einer Richtung quer zur Sitzrichtung in der zweiten Position der Schiebevorrichtung neben dem ersten Polster vorhanden ist. Beispielsweise weist das Gurtgestell das erste Polster auf. Beispielsweise ist das erste Polster an der Schiebevorrichtung angeordnet, z.B. befestigt. Denkbar ist weiter, dass die Stützvorrichtung in einer Richtung quer zur Sitzrichtung in der zweiten Position der Schiebevorrichtung neben der Schiebevorrichtung vorhanden ist. Auch wird vorgeschlagen, dass die Stützvorrichtung neben und beabstandet von der Schiebevorrichtung angeordnet ist. Beispielsweise ist die Stützvorrichtung als abnehmbares oder bewegliches Stützelement ausgebildet, welches in einem ersten Zustand eine Stützfunktion für ein weiteres Element, z.B. einen Fahrzeugtisch bereitstellt, und in einem zweiten Zustand eine Stützfunktion für das zweite Polsterelement.

Außerdem wird vorgeschlagen, dass das Gurtgestell ein erstes Auflageelement, z.B. die Sitzflächenauflage, für das erste Polster aufweist, wobei die Stützvorrichtung ein zweites Auflageelement mit einer Auflagefläche für das zweite Polster aufweist, wobei das erste und das zweite Auflageelement gelenkig oder schwenkbeweglich miteinander verbunden sind. Hierdurch ist das Gurtgestell oder die Fahrzeugsitzbank vergleichsweise einfach umbaubar. Vorstellbar ist, dass das erste Polster relativ zum zweiten Polster verschwenkbar vorhanden ist, z.B. drehbar oder klappbar.

Beispielsweise ist die Stützvorrichtung mittels eines Gelenks am Gurtgestell befestigt. Vorstellbar ist, dass die Stützvorrichtung das Gelenk aufweist. Zum Beispiel ist das zweite Auflageelement mittels des Gelenks schwenkbeweglich vorhanden. Denkbar ist, dass das zweite Auflageelement eine Leiste oder ein plattenförmiges Element aufweist, welches die Auflagefläche bereitstellt.

Zum Beispiel bildet die Stützvorrichtung eine Auflagefläche für das zweite Auflageelement, sodass das zweite Polster mittels des Auflageelements an der Auflagefläche der Stützvorrichtung aufliegt. Denkbar ist, dass die Stützvorrichtung als zweites Auflageelement ausgebildet ist. Beispielsweise weist das zweite Polster das zweite Auflageelement auf, z.B. bildet das zweite Auflageelement eine Grundfläche oder ein Grundelement für eine Polsterung des zweiten Polsters.

Denkbar ist auch, dass das erste Polster lösbar oder unlösbar mit dem ersten Auflageelement, z.B. der Sitzflächenauflage verbunden ist. Beispielsweise ist das erste Polster auf der Sitzflächenauflage angeordnet oder umfasst die Sitzflächenauflage. Vorstellbar ist weiter, dass das zweite Polster lösbar oder unlösbar mit dem zweiten Auflageelement verbunden ist.

Ebenfalls wird vorgeschlagen, dass das Gurtgestell das erste Polster und das zweite Polster aufweist, wobei das erste Polster und das zweite Polster beweglich miteinander verbunden sind. Hierdurch ist das Gurtgestell und/oder die Fahrzeugsitzbank vergleichsweise einfach umbaubar.

Beispielsweise sind das erste und das zweite Polster entlang einer Seitenfläche des jeweiligen Polsters miteinander verbunden. Beispielsweise sind das erste und das zweite Polster jeweils entlang einer langen Seitenfläche der Polster miteinander verbunden. Denkbar ist, dass das erste und das zweite Polster rechteckig ausgebildet sind, mit einer langen und einer kurzen Seitenfläche, sowie mit einer Dicke. Beispielsweise sind das erste und das zweite Polster beweglich miteinander vernäht. Beispielsweise sind das erste und das zweite Polster mittels eines Gelenks beweglich miteinander verbunden, z.B. mittelbar miteinander verbunden. Beispielsweise ist das zweite Polster beweglich z.B. gelenkig mit dem Unterbau verbunden. Z.B. ist das erste Polster an die Schiebevorrichtung angeordnet, z.B. unmittelbar.

Weiter wird vorgeschlagen, dass die Stützvorrichtung als eine Schiebeeinheit ausgebildet ist, wobei das zweite Auflageelement mittels der Schiebeeinheit linearbeweglich gelagert ist. Hierdurch ist das zweite Polster vergleichsweise einfach verstaubbar.

Beispielsweise ist das zweite Auflageelement in Form einer Schublade ausgebildet. Denkbar ist, dass das zweite Auflageelement mittels der Stützvorrichtung verschieblich am Unterbau des Gurtgestells angeordnet ist. Zum Beispiel ist das zweite Auflageelement in Form einer Schublade am Unterbau des Gurtgestells ausgebildet.

Beispielsweise ist die Stützvorrichtung an einem Schiebeorgan und/oder einer Schiene, z.B. einem Schienenelement, der Schiebeeinheit anordenbar oder angeordnet. Beispielsweise weist die Schiebeeinheit zwei Schienen auf. Denkbar ist, dass die Stützvorrichtung abnehmbar an einer Schiene der Schiebeeinheit anordenbar ausgebildet ist. Beispielsweise weist die Stützvorrichtung eine Stützstrebe auf, welche an einem Ende mit der Schiene der Schiebeeinheit, z.B. lösbar oder beweglich, verbindbar ist. Zum Beispiel ist an einem zweiten Ende der Stützstrebe das zweite Auflageelement ausgebildet.

Außerdem wird vorgeschlagen, dass das zweite Polster an der Schiebeeinheit lagerbar ist, sodass das zweite Polster mittels der Schiebeeinheit relativ zum ersten Polster verschieblich vorhanden ist. Hierdurch ist ein vergleichsweise einfacher Umbau der Fahrzeugsitzbank realisierbar.

Beispielsweise ist das zweite Polster positionsfest mit einem Schiebeorgan der Schiebeeinheit verbunden. Beispielsweise ist die Stützvorrichtung in Form einer Schublade ausgebildet. Denkbar ist, dass der Unterbau des Gurtgestells einen Lagerraum aufweist. Vorstellbar ist, dass das zweite Polster in einem Verstauzustand im Lagerraum positionierbar ist. Zum Beispiel ist die Schublade aus dem Lagerraum ausziehbar am Gurtgestell angeordnet. Beispielsweise ist der Lagerraum unterhalb der Schiebevorrichtung am Gurtgestell ausgebildet.

Auch wird vorgeschlagen, dass die Stützvorrichtung einen Stützfuß aufweist, mittels welchem die Auflagefläche der Stützvorrichtung gegenüber einem Fahrzeug, in welchem das Gurtgestell anordenbar ist, abgestützt wird. Hierdurch ist eine Funktionalität des Gurtgestells vorteilhaft erweitert

Weiter wird vorgeschlagen, dass die Stützvorrichtung gelenkig mit der Schiebevorrichtung verbunden ist, sodass die Stützvorrichtung relativ zur Schiebevorrichtung um eine Schwenkachse schwenkbar vorhanden ist. Hierdurch ist ein vergleichsweise kompaktes Gurtgestell realisierbar. Beispielsweise ist die Schwenkachse quer zu einer Drehachse der Schiebevorrichtung ausgebildet. Zum Beispiel ist die Schwenkachse parallel zur Sitzrichtung des Gurtgestells ausgerichtet. Denkbar ist, dass die Drehachse der Schiebevorrichtung quer zur Sitzrichtung, z.B. senkrecht zur Sitzrichtung, des Gurtgestells ausgerichtet ist. Beispielsweise erstreckt sich die Drehachse der Schiebevorrichtung im angeordneten Zustand am Fahrzeug entlang der Vertikalen.

Ebenfalls wird als beispielhafte Ausführungsmöglichkeit eine Fahrzeugsitzbank mit einem Gurtgestell nach einer der vorangegangen genannten Ausbildungsvarianten vorgeschlagen.

Beispielsweise weist die Fahrzeugsitzbank ein Sitzkissen auf. Denkbar ist, dass das Sitzkissen auf der Sitzflächenauflage aufliegend angeordnet ist. Zum Beispiel ist das Sitzkissen mit der Sitzflächenauflage lösbar oder unlösbar verbunden. Beispielsweise weist die Fahrzeugsitzbank ein Rückenkissen auf. Denkbar ist, dass das Rückenkissen lösbar mit dem Gurtgestell, z.B. mit der Vertikalstütze, verbindbar ausgebildet ist. Vorstellbar ist auch, das die Fahrzeugsitzbank eine oder mehrere Kopfstützen aufweist. Denkbar ist, dass die Kopfstütze lösbar oder unlösbar am Gurtgestell befestigt vorhanden ist, z.B. an der Vertikalstütze.

Beispielsweise ist die Fahrzeugsitzbank dazu ausgebildet, zwei Fahrzeugsitzplätze mit Sitzrichtung in Vorwärtsfahrtrichtung des Fahrzeugs im eingebauten Zustand der Fahrzeugsitzbank in einem Fahrzeug bereitzustellen. Zum Beispiel ist die Schiebevorrichtung des Gurtgestells der Fahrzeugsitzbank derart ausgebildet, sodass die Fahrzeugsitzbank Fahrzeugsitzplätze mit Sitzrichtung in Vorwärtsfahrtrichtung des Fahrzeugs im eingebauten Zustand der Fahrzeugsitzbank in einem Fahrzeug bereitstellt. Beispielsweise entspricht die Fahrtrichtung des Gurtgestells oder die Fahrtrichtung des Fahrzeugs der Vorwärtsfahrtrichtung des Fahrzeugs.

Außerdem wird ein Fahrzeugsitzensemble mit einer Fahrzeugsitzbank nach einer der vorangegangenen Ausführungsmöglichkeiten oder mit einem Gurtgestell nach einer der vorangegangen genannten Ausführungsvarianten und mit einem Fahrzeugsofa vorgeschlagen, wobei eine Sitzrichtung der Fahrzeugsitzbank quer zu einer Sitzrichtung des Fahrzeugsofas im angeordneten Zustand am Fahrzeug ausgerichtet ist, wobei das Fahrzeugsitzensemble dazu ausgebildet ist, dass ein Sitzkissen des Fahrzeugsofas und das erste Polster und das zweite Polster der Fahrzeugsitzbank zusammen die Liegefläche bilden.

Auch wird vorgeschlagen, dass das Fahrzeugsofa des Fahrzeugsitzensembles ein Abstützelement aufweist, um die Stützvorrichtung abzustützen. Beispielsweise weist das Fahrzeugsofa einen Kasten auf, an welchem die Stützvorrichtung des Gurtgestells befestigbar ist, z.B. unlösbar.

Beispielsweise ist das Abstützelement als eine Stützleiste ausgebildet. Denkbar ist, dass die Stützleiste sich in eine Längsrichtung erstreckt und die Längsrichtung quer zu einer Sitzrichtung des Fahrzeugsofas vorhanden ist. Beispielsweise erstreckt sich die Längsrichtung der Stützleiste in Sitzrichtung der Fahrzeugsitzbank, z.B. in Vorwärtsfahrtrichtung des Fahrzeugs. Denkbar ist auch, dass das Abstützelement Bestandteil der Stützvorrichtung ist. Beispielsweise bildet die Stützvorrichtung einen Untergestell des Fahrzeugsofas.

Eine beispielhafte Ausbildungsform der Erfindung ist ein Fahrzeug mit einem Gurtgestell nach einer der vorangegangenen Ausbildungsvarianten, mit einer Fahrzeugsitzbank nach einer der vorangegangenen Varianten oder mit einem Fahrzeugensemble, wie vorangegangen vorgeschlagen. Beispielsweise ist das Fahrzeug als ein Wohnmobil oder als ein Reisemobil ausgebildet.

### Figurenbeschreibung

Mehrere Ausführungsbeispiele werden anhand der nachstehenden Zeichnungen unter Angabe weiterer Einzelheiten und Vorteile näher erläutert:
Es zeigen:
- Figuren 1a bis 1c: eine Fahrzeugsitzbank mit einem Gurtgestell in einer Draufsicht im angeordneten Zustand in einem Fahrzeug, wobei eine Sitzflächenauflage in unterschiedlichen Positionen dargestellt ist,
- Figuren 2a bis 2c:: die Fahrzeugsitzbank gemäß Figur 1 in einer Draufsicht, wobei die Sitzflächenauflage in den unterschiedlichen Positionen gemäß Figuren 1a bis 1c dargestellt ist,
- Figuren 3a , 3b:: eine Schnittansicht auf ein am Gurtgestell angeordnetes Schienenelement mit daran angeordnetem Schiebeelement in einer ersten Variante des Schiebeelements,
- Figuren 4a, 4b:: eine Schnittansicht auf ein am Gurtgestell angeordnetes Schienenelement mit daran angeordnetem Schiebeelement in einer zweiten Variante des Schiebeelements,
- Figuren 5a bis 5c:: eine Ansicht von vorne auf eine erste Variante einer Fahrzeugsitzbank, wobei eine Sitzflächenauflage und eine Stützanordnung in unterschiedlichen Positionen dargestellt ist,
- Figuren 6a bis 6c:: eine Ansicht von vorne auf eine zweite Variante einer Fahrzeugsitzbank, wobei eine Sitzflächenauflage und eine Stützanordnung in unterschiedlichen Positionen dargestellt ist,
- Figuren 7a bis 7c:: eine Ansicht von vorne auf eine dritte Variante einer Fahrzeugsitzbank, wobei eine Sitzflächenauflage und eine Stützanordnung in unterschiedlichen Positionen dargestellt ist,
- Figuren 8a bis 8c:: eine Ansicht von vorne auf eine vierte Variante einer Fahrzeugsitzbank, wobei eine Sitzflächenauflage und eine Stützanordnung in unterschiedlichen Positionen dargestellt ist und
- Figuren 9a bis 9c:: eine Ansicht von vorne auf eine fünfte Variante einer Fahrzeugsitzbank, wobei eine Sitzflächenauflage und eine Stützanordnung in unterschiedlichen Positionen dargestellt ist.

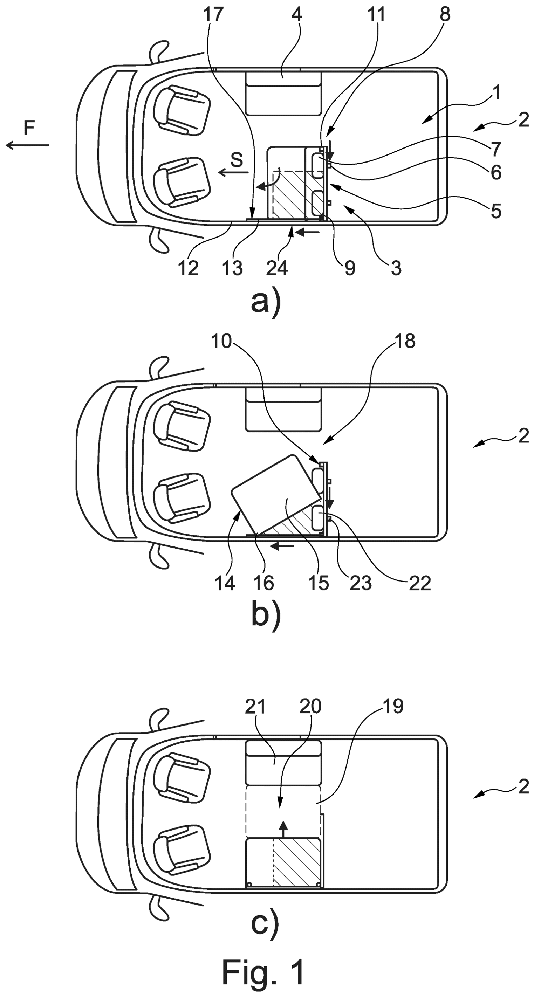

In Figur 1 ist in einer Draufsicht ein Innenraum 1 eines Fahrzeugs 2 dargestellt. Im Fahrzeug 2 ist eine Fahrzeugsitzbank 3 und ein Fahrzeugsofa 4 angeordnet.

Die Fahrzeugsitzbank 3 weist ein Gurtgestell 5 auf. Das Gurtgestell 5 weist beispielsweise eine Vertikalstütze 6 auf, an welcher eine Kopfstütze 7 angeordnet ist. An der Vertikalstütze 6 ist beispielsweise eine Querstrebe 8 angeordnet. Beispielsweise ist an der Querstrebe 8 und/oder an der Vertikalstütze 6 eine Schiebevorrichtung 24 angeordnet, wobei die Schiebevorrichtung 24 ein erstes Schienenelement 9 mit einer Führungskontur 10 aufweist. Beispielsweise ist am ersten Schienenelement 9 ein erstes Schiebeelement 11 des Gurtgestells 5 verschieblich gelagert.

Denkbar ist weiter, dass an einer Seitenwand 12 des Fahrzeugs 2 ein zweites Schienenelement 13 der Schiebevorrichtung 24 angeordnet ist. Beispielsweise sind das erste und das zweite Schienenelement 9, 13 quer, z.B. senkrecht, zueinander im angeordneten Zustand am Fahrzeug 2 vorhanden. Das Gurtgestell 5 weist eine Sitzflächenauflage 14 auf, an welcher ein Sitzkissen 15 der Fahrzeugsitzbank 3, z.B. ein erstes Polster, aufliegend angeordnet ist. Beispielsweise weist das Gurtgestell 5 ein zweites Schiebeelement 16 auf, welches verschieblich an einer Führungskontur 17 am zweiten Schienenelement 13 gelagert ist. Die Sitzflächenauflage 14 ist mittels des ersten und des zweiten Schiebeelementes 11, 16 verschieblich vorhanden oder verschieblich an den Schienenelementen 9, 13 gelagert.

Die Fahrzeugsitzbank 3 ist beispielsweise derart im Fahrzeug 2 angeordnet, dass eine Sitzrichtung S der Fahrzeugsitzbank 3, bei welcher eine Person für eine Fahrt mit dem Fahrzeug 2 gesichert an der Fahrzeugsitzbank 3 Platz nehmen kann, in Richtung oder parallel zu einer Vorwärtsfahrtrichtung F des Fahrzeugs 2 ausgerichtet ist. Denkbar ist, dass die Fahrzeugsitzbank 3 zusammen mit einem Fahrzeugsofa 4 ein Fahrzeugsitzensemble 18 bildet. Das Fahrzeugsofa 4 ist beispielsweise positionsunveränderlich im Fahrzeug 2 befestigt. Eine Sitzrichtung des Fahrzeugsofas 4 ist beispielsweise quer zur Sitzrichtung S der Fahrzeugsitzbank 3 ausgerichtet.

Die Sitzflächenauflage 14 ist aufgrund der verschieblichen Lagerung an den Schienenelementen 9, 13 in einer Schwenk-Schiebebewegung aus einer ersten Position gemäß Figur 1a in eine zweite Position gemäß Figur 1c bewegbar. In Figur 1b ist eine Zwischenposition der Sitzflächenauflage 14 in der Schwenk-Schiebebewegung gezeigt. Durch die Schwenk-Schiebebewegung werden die Schiebeelemente 11, 16 entlang der jeweiligen Schienenelemente 9, 13 von einer ersten Position in eine zweite Position bewegt.

In der zweiten Position der Sitzflächenauflage 14 ist eine Sitzrichtung der Sitzflächenauflage 14 quer zur Sitzrichtung S der Sitzflächenauflage 14 in der ersten Position ausgerichtet. Beispielsweise ist die Sitzflächenauflage 14 durch die Schwenk-Schiebebewegung um 90° bewegbar oder versetzbar. Hierdurch ist die Sitzrichtung der Sitzflächenauflage 14 in der zweiten Position gegenüberliegend, entgegengesetzt oder parallel zur Sitzrichtung des Fahrzeugsofas 4 ausgerichtet. Durch Anbringen einer Zwischenfläche, z.B. eines zweiten Polsters 19, beispielsweise durch Ausziehen gemäß Figur 1c ist hierdurch eine Liegefläche 20 realisierbar. Die Liegefläche 20 ist beispielweise durch das Sitzkissen 15, das zweite Polster 19 und ein Sitzkissen 21 des Fahrzeugsofas 4 gebildet.

Vorstellbar ist weiterhin, dass die Fahrzeugsitzbank 3 für zwei Sitzplätze ausgebildet ist, wobei an jedem Sitzplatz eine Person während der Fahrt gesichert Platz nehmen kann. Beispielsweise weist die Fahrzeugsitzbank 3 hierzu eine weitere Kopfstütze 22 auf, welche beispielsweise an einer weiteren Vertikalstütze 23 angeordnet ist. Denkbar ist jedoch auch, dass die Kopfstützen 7, 22 über eine weitere Querstrebe (nicht gezeigt) mit der ersten Vertikalstütze 6 verbunden sind.

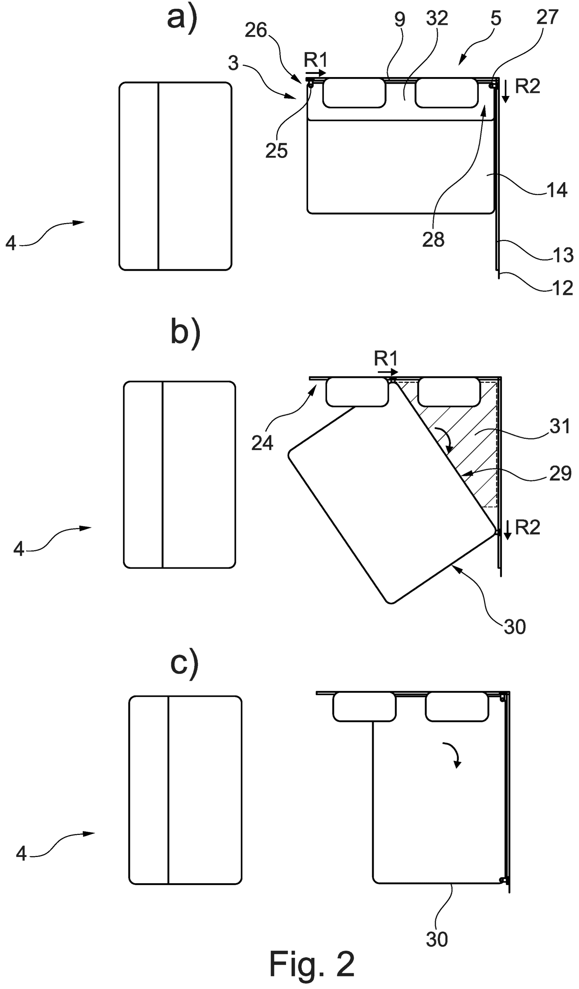

In den Figuren 2a bis 2c ist die Schwenk-Schiebebewegung der Sitzflächenauflage 14 des Gurtgestells 5 der Fahrzeugsitzbank 3 dargestellt. Das erste Schiebeelement 11 ist an einem ersten Anbindungspunkt 25 an einem ersten Eckbereich 26 der Sitzflächenauflage 14 angeordnet und das zweite Schiebeelement 16 ist an einem zweiten Anbindungspunkt 27 an einem zweiten Eckbereich 28 der Sitzflächenauflage 14 angeordnet.

Beispielsweise ist das erste Schiebelement 11 entlang einer ersten Richtung R1 in einer linearen Bewegung verschieblich am ersten Schienenelement 9 gelagert. Beispielsweise ist das zweite Schiebeelement 16 entlang einer zweiten Richtung R2 in einer linearen Bewegung verschieblich am zweiten Schienenelement 13 gelagert.

Eine Schwenk-Schiebebewegung aus der ersten in die zweite Position der Sitzflächenauflage 14 findet beispielsweise durch folgende Bewegungen statt:
Zunächst wird beispielsweise die Sitzflächenauflage 14 mittels einer Schiebebewegung in Richtung R2 verschoben. Hierdurch ist ein Abstand zwischen einer Längsseite 29 der Sitzflächenauflage 14 und dem ersten Schienenelement 9 vergrößert. Beispielsweise ist ein Abstand in Richtung R2 zwischen der Längsseite 29 der Sitzflächenauflage 14 und dem ersten Schienenelement 9 hierdurch vergrößert. Denkbar ist weiter, dass in einer Schiebebewegung, welche zeitgleich, davor oder danach stattfindet, die Sitzflächenauflage entgegen der Richtung R1 weg von der Seitenwand 12 verschoben wird, wodurch ein Abstand einer Breitseite 30 zum zweiten Schienenelement 16 vergrößert ist. Vorstellbar ist jedoch auch, dass für die Schwenk-Schiebebewegung die vorangegangen genannten Schiebebewegungen nicht notwendig sind.

Anschließend wird die Sitzflächenauflage 14 mittels einer Schwenk-Schiebebewegung aus der ersten Position gemäß Figur 2a in die zweite Position gemäß Figur 2c bewegt. Hierbei gleitet das erste Schiebeelement 11 in Richtung R1 entlang einer Längsachse des ersten Schienenelements 9 und das zweite Schiebeelement 16 gleitet in Richtung R2 entlang einer Längsachse des zweiten Schienenelements 13. Während der Schwenk-Schiebewegung werden die Schiebelemente 11 relativ zur Sitzflächenauflage 14 um 90° gedreht, wobei beispielsweise die Drehachsen durch die Anbindungspunkte 25 und 27 gebildet werden.

Zum Beispiel ist die Sitzflächenauflage 14 rechteckig ausgebildet und weist eine Längsseite 29 und eine Breitseite 30 auf. Beispielsweise ist in der ersten Position der Sitzflächenauflage 14 die Längsseite 29 parallel zum, z.B. anliegend am, ersten Schienenelement 9 angeordnet und in der zweiten Position der Sitzflächenauflage 14 ist die Längsseite 29 parallel zum, z.B. anliegend am, zweiten Schienenelement 13 angeordnet. Beispielsweise ist in der ersten Position der Sitzflächenauflage 14 die Breitseite 30 parallel zum, z.B. anliegend am, zweiten Schienenelement 13 angeordnet und in der zweiten Position der Sitzflächenauflage 14 ist die Breitseite 30 parallel zum ersten Schienenelement 9 angeordnet.

Vorstellbar ist auch, dass das Gurtgestell 5 einen Unterbau 31 aufweist, welcher in den Figuren 1a bis 1c und 2b schraffiert dargestellt ist. Beispielsweise weist die Fahrzeugsitzbank 3 ein Rückenlehnenpolster 32 auf, an welches sich eine Person anlehnen kann. Das Rückenlehnenpolster 32 ist beispielsweise beweglich vorhanden, sodass es sich von der Fahrzeugsitzbank 3 entfernen lässt, um beispielsweise die Liegefläche 20 zu vergrößern.

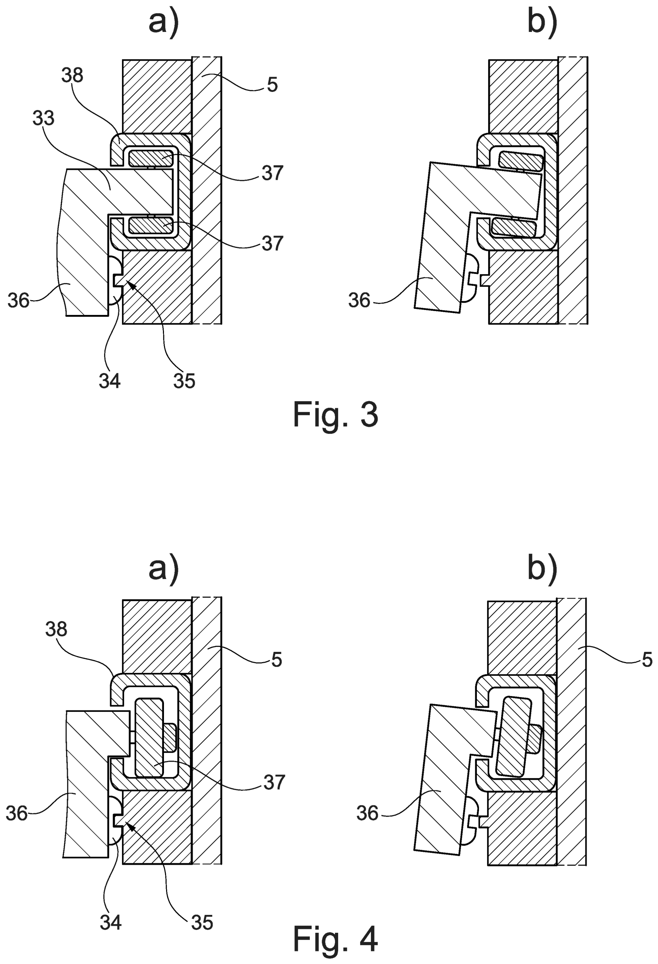

In den Figuren 3a und 3b ist eine erste Variante eines Schiebeelements 36 in Form eines ersten Gleiters 33 dargestellt und in den Figuren 4a und 4b eine zweite Variante des Schiebeelements 36. Beispielsweise weist das Schiebelement 36 ein Verrastungsorgan 34 auf, welches z.B. in der ersten und/oder in der zweiten Position der Sitzflächenauflage 14 mit einem Verrastungselement 35 des Gurtgestells 5 verrastet, sodass die Sitzflächenauflage 14 in der ersten und/oder in der zweiten Position festlegbar ist. Beispielsweise ist das Schiebeelement 36 aufgrund einer Schwenkbewegung aus der Verrastung lösbar ausgebildet. Beispielsweise ist der Gleiter 33 mittels Rollen 37 beweglich am Schienenelement 38 gelagert. Beispielsweise sind die Rollen horizontal (gemäß erster Variante, Figuren 3a, 3b) oder senkrecht oder vertikal (gemäß zweiter Variante, Figuren 4a, 4b) am Schienenelement 38 ausgebildet.

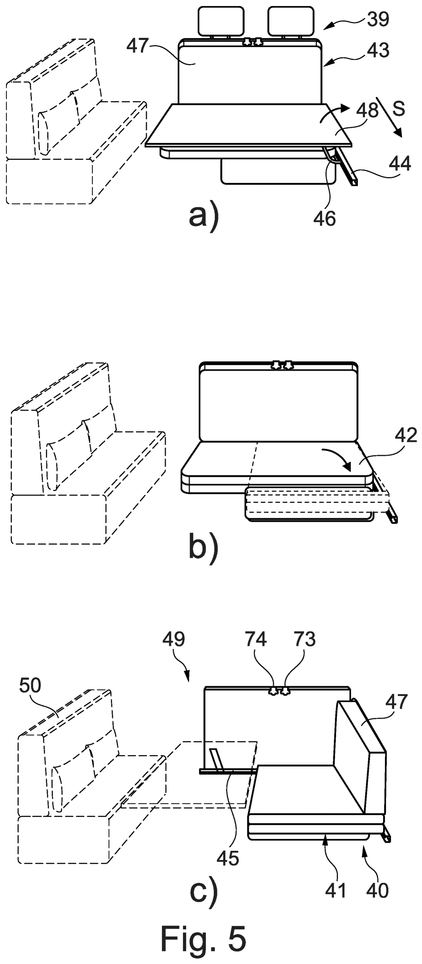

In den Figuren 5a bis 5c ist eine weitere Variante einer Gurtgestells 39 gezeigt. Das Gurtgestell 39 weist eine Sitzflächenauflage 40 auf, wobei auf einer Auflagefläche 41 des Sitzflächenelements 40 ein Sitzkissen 42 einer mit dem Gurtgestell 39 gebildeten Fahrzeugsitzbank 43 angeordnet ist. Die Sitzflächenauflage 40 ist aus einer ersten Position gemäß Figur 5a mittels einer Schwenk-Schiebebewegung, wie anhand der Figuren 1 und 2 beschrieben, in eine zweite Position gemäß Figur 5b und 5c schwenkbar.

An Schienenelementen 44, 45 des Gurtgestells 39 ist eine Stützvorrichtung 46 lösbar befestigt. Beispielsweise ist die Stützvorrichtung 46 in Führungskonturen der Schienenelemente 44, 45 einhängbar. Beispielsweise weist die Fahrzeugsitzbank 43 ein Rückenlehnenpolster 47 auf, welches ebenfalls bewegbar vorhanden ist, sodass es in beiden Positionen der Sitzflächenauflage 40 einem Nutzer als Anlehnfläche für den Rücken des Nutzers dienen kann.

An der Stützvorrichtung 46 kann eine Tischplatte 48 angeordnet sein. In einer ersten Position, in welcher die Stützvorrichtung 46 am zweiten Schienenelement 44 angeordnet ist, kann die Tischplatte als eine Tischfläche genutzt werden. In einer zweiten Position, in welcher die Stützvorrichtung 46 am ersten Schienenelement 45 angeordnet ist, kann die Tischplatte 48 wahlweise als Tischfläche für ein Fahrzeugsitzensemble 49 umfassend die Fahrzeugsitzbank 43 und ein Fahrzeugsofa 50 dienen. In der zweiten Position ist die Stützvorrichtung 46 quer zur Sitzrichtung S der Fahrzeugsitzbank 43 neben dem Sitzkissen 42 am ersten Schienenelement 45 angeordnet.

Denkbar ist auch, dass die Tischplatte 48 in der Höhe verstellbar an der Stützvorrichtung 46 vorhanden ist, sodass auf die Tischfläche oder auf die Auflagefläche der Tischplatte 48, ein zweites Polster (in den Figuren 5 nicht dargestellt) auflegbar ist und damit eine Liegefläche umfassend das Sitzkissen 42, das zweite Polster und das Sitzkissen des Fahrzeugsofas 50 realisierbar ist.

In den Figuren 5a bis 5c ist auch gezeigt, dass die Fahrzeugsitzbank 43 Sicherheitsgurte 73, 74 für zwei Fahrzeugsitzplätze aufweist.

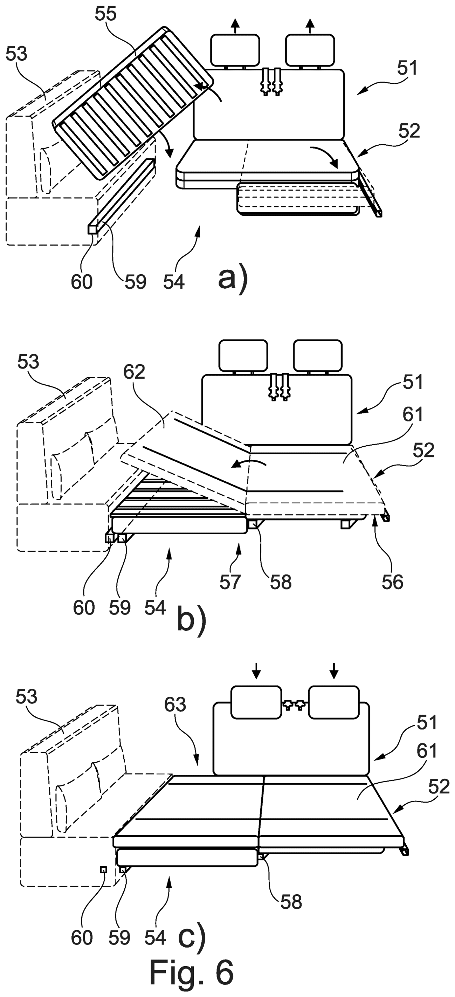

In den Figuren 6a bis 6c ist eine weitere Variante einer Fahrzeugsitzbank 51 gezeigt. Die Fahrzeugsitzbank 51 weist ein Gurtgestell 52 auf und bildet zusammen mit einem Fahrzeugsofa 53 ein Fahrzeugsitzensemble 54. Die Fahrzeugsitzbank 51 weist ein Sitzkissen 55 auf, welches abnehmbar auf einer Sitzflächenauflage 56 des Gurtgestells 52 angeordnet ist. Beispielsweise kann das Sitzkissen 55 von der Sitzflächenauflage 56 abgenommen werden. Anschließend kann die Sitzflächenauflage 56 mittels einer Schwenk-Schiebebewegung von einer ersten Position in eine zweite Position verschwenkt werden. Anschließend kann das Sitzkissen 55 aufliegend auf einer Stützvorrichtung 57 aufgelegt werden, wobei die Stützvorrichtung 57 beispielsweise als eine erste und eine zweite Stützleiste 58, 59 ausgebildet ist. Denkbar ist, dass eine erste Stützleiste 58 an der Sitzflächenauflage 56 befestigt ist und eine zweite Stützleiste 59 am Fahrzeugsofa 53. Denkbar ist, dass das Fahrzeugsofa 53 ein Abstützelement 60 aufweist, an welchem die Stützleiste 59 abgestützt angeordnet ist.

Auf der Sitzflächenauflage 56 kann ein weiteres Sitzkissen 61 angeordnet sein, welches mit einem zweiten Sitzkissen 62 beispielsweise klappbar verbunden ist, z.B. vernäht. Dadurch kann das zweite Sitzkissen 62 in der zweiten Position der Sitzflächenauflage 56 aufliegend auf das Sitzkissen 55 aufgeklappt werden, sodass eine Liegefläche 63 des Fahrzeugsitzensembles 54 realisiert ist.

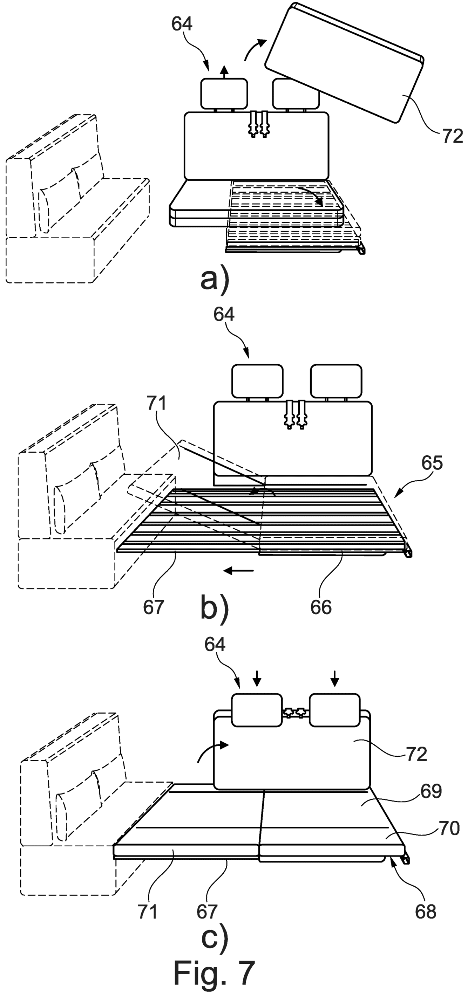

In den Figuren 7a bis 7c ist eine weitere Variante einer Fahrzeugsitzbank 64 gezeigt. Die Fahrzeugsitzbank 64 weist ein Gurtgestell 65 auf, welches eine Schiebeeinheit 66 umfasst. An der Schiebeeinheit 66 ist eine Stützvorrichtung 67 ausziehbar angeordnet. Auf einer Sitzflächenauflage 68 ist beispielsweise ein ausklappbares Sitzkissen 69 aufweisend ein erstes und ein zweites Polster 70, 71 angeordnet. Das Sitzkissen 69 ist in einem zweiten Zustand der Sitzflächenauflage 68 gemäß Figur 7c mit dem zweiten Polster 71 auf die ausgezogene Stützvorrichtung 67 aufliegend anordenbar. Um das zweite Polster 71 aufklappen zu können, ist beispielsweise ein Rückenlehnenpolster 72 der Fahrzeugsitzbank 64 abnehmbar vorhanden.

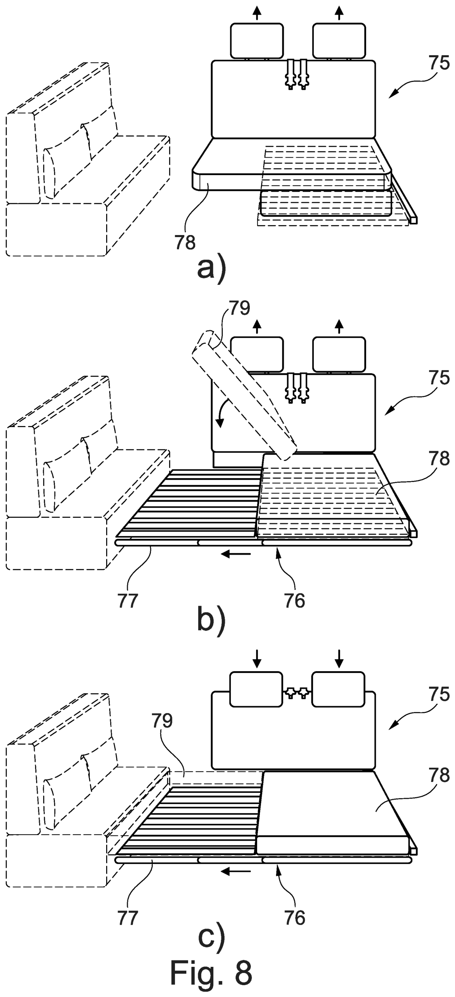

In den Figuren 8a bis 8c ist eine weitere Variante einer Fahrzeugsitzbank 75 gezeigt. Auch die Fahrzeugsitzbank 75 weist analog zur Fahrzeugsitzbank 64 gemäß Figuren 7a bis 7c eine Schiebeeinheit 76 auf, an welcher ausziehbar eine Stützvorrichtung 77 vorhanden ist. Im Unterschied zur Ausführung gemäß den Figuren 7a bis 7c weist die Fahrzeugsitzbank 75 zwei voneinander getrennte Polster 78, 79 auf. Das zweite Polster 79 ist hierdurch an einer andere Stelle des Fahrzeugs verwendbar oder verstaubar.

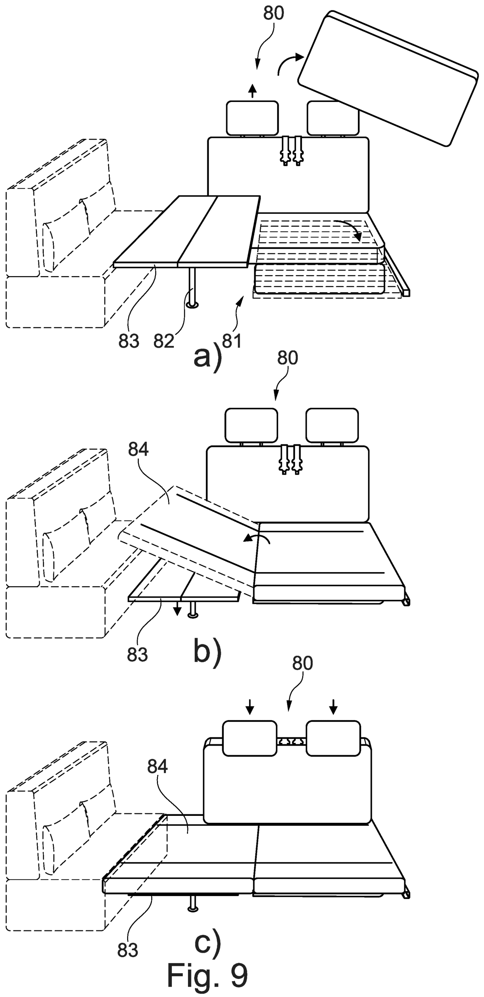

In den Figuren 9a bis 9c ist eine weitere Variante einer Fahrzeugsitzbank 80 gezeigt. Gezeigt ist, dass ein Gurtgestell 81 der Fahrzeugsitzbank 80 eine Stützvorrichtung 82 mit einem Auflageelement 83 aufweist., wobei das Auflageelement 83 in der Höhe verstellbar ist und dadurch zum einen als Tischfläche gemäß Figur 9a oder als Auflagefläche für ein zweites Polster 84 dienen kann.

**Bezugszeichenliste**

| | | | |
|---|---|---|---|
| 1 | Innenraum | 35 | Verrastungselement |
| 2 | Fahrzeug | 36 | Schiebeelement |
| 3 | Fahrzeugsitzbank | 37 | Rollen |
| 4 | Fahrzeugsofa | 38 | Schienenelement |
| 5 | Gurtgestell | 39 | Gurtgestell |
| 6 | Vertikalstütze | 40 | Sitzflächenauflage |
| 7 | Kopfstütze | 41 | Auflagefläche |
| 8 | Querstrebe | 42 | Sitzkissen |
| 9 | Schienenelement | 43 | Fahrzeugsitzbank |
| 10 | Führungskontur | 44 | Schienenelement |
| 11 | Schiebeelement | 45 | Schienenelement |
| 12 | Seitenwand | 46 | Stützvorrichtung |
| 13 | Schienenelement | 47 | Rückenlehnenpolster |
| 14 | Sitzflächenauflage | 48 | Tischplatte |
| 15 | Sitzkissen | 49 | Fahrzeugsitzensemble |
| 16 | Schiebeelement | 50 | Fahrzeugsofa |
| 17 | Führungskontur | 51 | Fahrzeugsitzbank |
| 18 | Fahrzeugsitzensemble | 52 | Gurtgestell |
| 19 | Polster | 53 | Fahrzeugsofa |
| 20 | Liegefläche | 54 | Fahrzeugsitzensemble |
| 21 | Sitzkissen | 55 | Sitzkissen |
| 22 | Kopfstütze | 56 | Sitzflächenauflage |
| 23 | Vertikalstütze | 57 | Stützvorrichtung |
| 24 | Schiebevorrichtung | 58 | Stützleiste |
| 25 | Anbindungspunkt | 59 | Stützleiste |
| 26 | Eckbereich | 60 | Abstützelement |
| 27 | Anbindungspunkt | 61 | Sitzkissen |
| 28 | Eckbereich | 62 | Sitzkissen |
| 29 | Längsseite | 63 | Liegefläche |
| 30 | Breitseite | 64 | Fahrzeugsitzbank |
| 31 | Unterbau | 65 | Gurtgestell |
| 32 | Rückenlehnenpolster | 66 | Schiebeinheit |
| 33 | Gleiter | 67 | Stützvorrichtung |
| 34 | Verrastungsorgan | 68 | Sitzflächenauflage |
| 69 | Sitzkissen | 77 | Stützvorrichtung |
| 70 | Polster | 78 | Polster |
| 71 | Polster | 79 | Polster |
| 72 | Rückenlehnenpolster | 80 | Fahrzeugsitzbank |
| 73 | Sicherheitsgurt | 81 | Gurtgestell |
| 74 | Sicherheitsgurt | 82 | Stützvorrichtung |
| 75 | Fahrzeugsitzbank | 83 | Auflageelement |
| 76 | Schiebeeinheit | 84 | Polster |

## Patentansprüche

1. Gurtgestell (5) einer Fahrzeugsitzbank (3), wobei im angeordneten Zustand des Gurtgestells (5) an der Fahrzeugsitzbank (3) die Fahrzeugsitzbank (3) einen Fahrzeugsitzplatz bereitstellt, wobei das Gurtgestell (5) eine Schiebevorrichtung (24) aufweist, um eine Sitzflächenauflage (14) des Gurtgestells (5) in einer Schwenk-Schiebebewegung von einer ersten Position in eine zweite Position zu verschwenken, wobei die Schiebevorrichtung (24) ein erstes und ein zweites Schiebeelement (11, 16) aufweist, wobei das erste und das zweite Schiebeelement (11, 16) voneinander beabstandet an der Sitzflächenauflage (14) angeordnet sind, wobei die Schiebevorrichtung (24) eine erste und eine zweite Führungskontur (10, 17) aufweist, wobei das erste Schiebeelement (9) verschieblich an der ersten Führungskontur (10) gelagert ist, wobei das zweite Schiebelement (16) an der zweiten Führungskontur (17) verschieblich gelagert ist, sodass durch das Zusammenspiel der ersten und der zweiten Führungskontur (10, 17) und des ersten und des zweiten Schiebeelements (11, 16) die Schwenk-Schiebebewegung vorgegeben ist.

2. Gurtgestell (5) nach dem vorangegangenen Anspruch 1, **dadurch gekennzeichnet, dass** die Schiebevorrichtung (24) ein erstes Schienenelement (9) aufweist, wobei das erste Schienenelement (9) in seiner Längserstreckung horizontal ausgerichtet am Gurtgestell (5) vorhanden ist, wobei das erste Schienenelement (9) sich im angeordneten Zustand des Gurtgestells (5) in einem Fahrzeug (2) entlang der Längserstreckung des ersten Schienenelements (9) quer zu einer Fahrtrichtung (F) des Fahrzeugs (2) erstreckt, wobei das erste Schiebeelement (9) am ersten Schienenelement (9) verschieblich gelagert ist, sodass das erste Schiebeelement (9) entlang der Längserstreckung des ersten Schienenelements (9) am ersten Schienenelement (9) verschieblich ist.

3. Gurtgestell (5) nach einem der vorangegangenen Ansprüche, **dadurch gekennzeichnet, dass** das erste Schiebelement (9) in der Schwenk-Schiebebewegung in einer ersten linearen Richtung (R1) bewegt wird, wobei das zweite Schiebeelement (16) in der Schwenk-Schiebebewegung in einer zweiten linearen Richtung (R2) bewegt wird, wobei die erste und die zweite Richtung (R1, R2) quer zueinander ausgerichtet vorhanden sind.

4. Gurtgestell (5) nach einem der vorangegangenen Ansprüche, **dadurch gekennzeichnet, dass** das erste Schienenelement (9) als eine Schiene ausgebildet ist und das erste Schiebeelement (9) als ein Gleiter oder als ein Schienen-Wagen ausgebildet ist.

5. Gurtgestell (5) nach einem der vorangegangenen Ansprüche, **dadurch gekennzeichnet, dass** die Schiebevorrichtung (24) ein zweites Schienenelement (13) aufweist, wobei das zweite Schienenelement (13) eine Längserstreckung aufweist, welche quer zur Längserstreckung des ersten Schienenelements (9) ausgerichtet ist.

6. Gurtgestell (5) nach dem vorangegangenen Anspruch 5, **dadurch gekennzeichnet, dass** das zweite Schiebeelement (16) am zweiten Schienenelement (13) verschieblich gelagert ist, sodass das zweite Schiebeelement (16) entlang einer Längserstreckung des zweiten Schienenelements (13) am zweiten Schienenelement (13) verschieblich ist.

7. Gurtgestell (5) nach einem der vorangegangenen Ansprüche, **dadurch gekennzeichnet, dass** das erste Schiebeelement (9) mit dem zweiten Schiebeelement (16) verbunden ist.

8. Gurtgestell (5) nach einem der vorangegangenen Ansprüche, **dadurch gekennzeichnet, dass** die Sitzflächenauflage (14) eine rechteckige Form aufweist, wobei das erste Schiebeelement (9) an einer ersten Eckbereich der Sitzflächenauflage (14) mit der Sitzflächenauflage (14) verbunden ist, wobei das zweite Schiebeelement (16) an einem zweiten Eckbereich der Sitzflächenauflage (14) mit der Sitzflächenauflage (14) verbunden ist.

9. Gurtgestell (5) nach einem der vorangegangenen Ansprüche, **dadurch gekennzeichnet, dass** das Gurtgestell (5) eine Stützvorrichtung (46) aufweist, welche an einem Schienenelement (9, 13) befestigbar ist, wobei an der Stützvorrichtung (46) eine Tischfläche eines Tisch (48) anordenbar ist, wobei die Stützvorrichtung (46) dazu ausgebildet ist, im befestigten Zustand am Schienenelement (44, 45) die Tischfläche abzustützen.

10. Gurtgestell (5) nach einem der vorangegangenen Ansprüche, **dadurch gekennzeichnet, dass** das erste und/oder das zweite Schiebeelement (9, 16) gelenkig und/oder beweglich mit der Sitzflächenauflage (14) verbunden ist.

11. Fahrzeugsitzbank (3) mit einem Gurtgestell (5) nach einem der vorangegangenen Ansprüche 1 bis 10.

12. Fahrzeug (2) mit einem Gurtgestell (5) nach einem der vorangegangenen Ansprüche 1 bis 10 oder mit einer Fahrzeugsitzbank (3) nach einem der vorangegangenen Ansprüche 11.
